# EUROPEAN PATENT SPECIFICATION

(11) **EP 3 839 785 B1**
(45) Date of publication and mention of the grant of the patent: **26.07.2023**
(21) Application number: 21157581.6
(22) Date of filing: 02.03.2017
(51) Int. Cl.: G06F 21/56

(54) **CHARACTERIZING MALWARE FILES FOR SIMILARITY SEARCHING**
KENNZEICHNEN VON MALWRE-DATEIEN ZUR ÄHNLICHKEITSSUCHE
CARACTÉRISATION DE FICHIERS DE PROGRAMME MALVEILLANT POUR UNE RECHERCHE DE SIMILITUDE

(43) Date of publication of application: 23.06.2021
(62) Divisional of application: 17382109.1
(73) Proprietor: X Development LLC, Mountain View, CA 94043 (US)
(72) Inventor: MARTÍNEZ CONTRERAS, Emiliano, Mountain View, California 94043 (US)
(74) Representative: Chettle, John Edward

(56) References cited:
- US-A1- 2007 240 222
- US-A1- 2011 162 070
- US-A1- 2014 090 061
- US-B1- 8 161 548

## Description

### BACKGROUND

This specification generally relates to antivirus software programs. United States patent no. US 8,161,548 B1 presents a malware classifier that uses features of suspect software to classify the software as malicious or not. United States patent application publication no. US 2014/0090061 A1 presents systems and methods for automated machine-learning, zero-day malware detection. United States patent application publication no. US 2007/0240222 A1 presents a system and method for providing malware protection on client mobile platforms in a mobile network. United States patent application publication no. US 2011/0162070 A1 presents a computer network device that receives a digital file and extracts a plurality of high level features from the file.

### SUMMARY

Malware often disrupts computer operations and gathers private or sensitive information of users or organizations without permission. Antivirus software is used to detect malware. In order to advance antivirus software and reduce the occurrence and severity of malware attacks, previously-identified malware may be analyzed. By reverse engineering malware programs, malware detection algorithms can be improved.

In some cases, when a malware file is identified, a hash for the file may be generated. In general, the hashes do not overlap, so each hash uniquely identifies a file. However, because the hashes are unique, these hashes do not assist with identifying families of similarly structured malware. Analysis of families of malware that have similar properties allows identification of patterns in malware code. In some examples, the origin or creator of a particular piece of malware can be identified based on a signature feature. Also, the evolution of a type of malware may be tracked to assist in anticipating or better preparing for future attacks.

Files include global features that provide information describing the properties of, operations performed by, and the data contained within the particular file. For example, a common global feature is the file format, which specifies how bits are used to encode the information in the file. Other exemplary features include metadata, executable tasks, etc. Generally, malware files related to or derived from a particular malware file share common file features with the initial file. By grouping pieces of malware into families based on common global features, signatures that identify variants of a malware file that may be detected or removed in similar ways can be produced.

In one implementation, a malware characterization system extracts global features from a file. Specific features may be extracted based on the file type of the malware. For example, features extracted from .exe files may differ from features extracted from .pdf or .doc files. Feature extraction based on file type eliminates the need for blind feature extraction from binary files, which is resource intensive and time consuming. Based on these global features, the system generates a hash for the file. The hash serves as an identifier for a cluster of files-files having common features are assigned the same hash, and all files having the same hash are returned upon searching for the hash. Because the hashes index the files, search results can be returned quickly, decreasing latency and reducing processing resources required to execute the search.

In general, one innovative aspect of the subject matter described in this specification can be embodied in a method that includes clustering files by a file characterization system that includes one or more computers. The method includes receiving a file, determining a format of the file, selecting, based on the format of the file, a set of one or more file features associated with the format, extracting, for each file feature of the set of one or more file features, a respective feature value for the file feature from the file, and generating, based on the feature values, a hash for the file.

Implementations may include one or more of the following features. For example, the files that have matching feature values for each file feature of the set of one or more file features may have a same hash. In some implementations, the method may include submitting, as a search query to search an index, the generated hash for the file, wherein the index lists a plurality of files by respective hashes, and receiving, in response to submitting the search query, all files having the generated hash.

In some implementations, at least one file feature of the set of one or more file features is a file size, a file type, or a metadata value. The method may include indexing, in an index that lists a plurality of files by respective hashes for the plurality of files, the file using the generated hash. In some implementations, generating, based on values of the extracted data, the hash for the file includes combining the feature values to generate a combined representation of the features of the file, and applying a hashing function to the combined representation to generate the hash of the file.

In some implementations, selecting, based on the format of the file, a set of one or more file features of files having the format includes identifying, based on the format of the file, a predetermined set of one or more file features, and updating, in response to extracting the respective feature values by the one or more computers and based on the values of the extracted respective feature values, the predetermined set of one or more file features.

Another innovative aspect of the subject matter described in this specification can be embodied in a file characterization system that includes one or more computers and one or more storage devices storing instructions that when executed by the one or more computers cause the one or more computers to perform operations. These operations include receiving a file, determining a format of the file, selecting, based on the format of the file, a set of one or more file features associated with the format, extracting, for each file feature of the set of one or more file features, a respective feature value for the file feature from the file, and generating, based on the feature values, a hash for the file.

In some implementations, the files that have matching feature values for each file feature of the set of one or more file features have a same hash. In some implementations, the operations include submitting, as a search query to search an index, the generated hash for the file, wherein the index lists a plurality of files by respective hashes, and receiving, in response to submitting the search query, all files having the generated hash.

In some implementations, at least one file feature of the set of one or more file features is a file size, a file type, or a metadata value. In some implementations, the operations include indexing, in an index that lists a plurality of files by respective hashes for the plurality of files, the file using the generated hash. In some implementations, generating, based on values of the extracted data, the hash for the file includes combining the feature values to generate a combined representation of the features of the file, and applying a hashing function to the combined representation to generate the hash of the file.

In some implementations, selecting, based on the format of the file, a set of one or more file features of files having the format includes identifying, based on the format of the file, a predetermined set of one or more file features, and updating, in response to extracting the respective feature values and based on the values of the extracted respective feature values, the predetermined set of one or more file features.

Another innovative aspect of the subject matter described in this specification can be embodied in one or more non-transitory computer readable media storing instructions that when executed by one or more computers cause the one or more computers to perform operations. These operations include receiving a file, determining a format of the file, selecting, based on the format of the file, a set of one or more file features associated with the format, extracting, for each file feature of the set of one or more file features, a respective feature value for the file feature from the file, and generating, based on the feature values, a hash for the file.

In some implementations, the files that have matching feature values for each file feature of the set of one or more file features have a same hash. In some implementations, the operations include submitting, as a search query to search an index, the generated hash for the file, wherein the index lists a plurality of files by respective hashes, and receiving, in response to submitting the search query, all files having the generated hash.

In some implementations, at least one file feature of the set of one or more file features is a file size, a file type, or a metadata value. In some implementations, the operations include indexing, in an index that lists a plurality of files by respective hashes for the plurality of files, the file using the generated hash. In some implementations, generating, based on values of the extracted data, the hash for the file includes combining the feature values to generate a combined representation of the features of the file, and applying a hashing function to the combined representation to generate the hash of the file.

The subject matter described in this specification can be implemented in particular embodiments so as to realize one or more of the following advantages. The disclosed system groups pieces of malware into families based on common global features, allowing the analysis of families of malware that have similar structures. By classifying malware into families that have similar features or structures, pieces of malware that are similar to, but not the same file as, the specific file being characterized can be accurately identified based on the generated hash that directs to all classified malware within the same family. Additionally, because the malware is indexed by the generated hash, search results can be returned quickly. By analyzing malware families, patterns in malware code and/or the origin or creator of a particular piece of malware can be identified, and the evolution of a type of malware can be tracked. Also, by identifying, for instance, the origin or creator of a particular piece of malware, a method of removal of the malware file may be identified and /or implemented. These advantages allow better anticipation of, preparation for and faster responses to future attacks.

The details of one or more implementations of the subject matter described in this specification are set forth in the accompanying drawings and the description below. Other potential features, aspects, and advantages of the subject matter will become apparent from the description, the drawings, and the claims.

### BRIEF DESCRIPTION OF THE DRAWINGS

FIG. 1 is a system diagram that illustrates an example file characterization system.
FIG. 2 is a flow diagram that illustrates an example process for characterizing files.
FIG. 3 is a flow diagram that illustrates an example process for searching for and identifying files.
FIG. 4 is a block diagram of an example computing system.

Like reference numbers and designations in the various drawings indicate like elements.

### DETAILED DESCRIPTION

This document generally describes techniques for characterizing files in a security context.

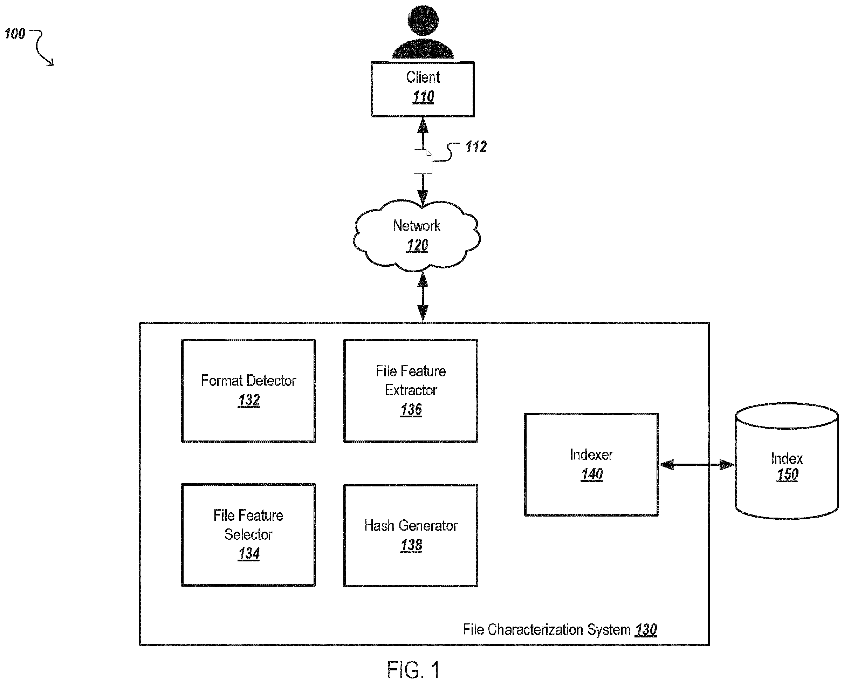

FIG. 1 is a system diagram that illustrates an example environment 100 in which an exemplary file characterization system 130 is shown. The environment 100 includes client devices through which users can submit files to be analyzed and characterized. The environment 100 includes a client device 110, which is communicably connected to a network 120. The client device 110 is connected to a file characterization system 130 through the network 120, and may transmit one or more files 112 to the file characterization system 130 for processing.

The client device 110 may be an electronic device that is capable of requesting and receiving resources over the network 120. Example client devices 110 include personal computers, mobile communication devices, and other devices that can send and receive data over the network 120. A client device 110 typically includes a user application, such as a web browser, to facilitate the sending and receiving of data over the network 120, but native applications executed by the client device 110 can also facilitate the sending and receiving of data over the network 120.

The file 112 is an electronic resource that stores information, and can include a variety of content. The file 112 has a format defined by its content. The format of the file 112 may be indicated, for example, by a filename extension. The format of a file defines the structure of how information is encoded for storage in the file by specifying how bits are used to encode information in a digital storage medium. For example, a file may be in any of various types of file formats, including multimedia audio and/or video, batch files, executable files, image files, text files, compressed files, class files, database files, or other file formats. The filename extension of a file indicates a characteristic of the file, such as the format of the file, and is usually an identifier specified as a suffix to the name of a file. For example, a file may have a filename extension of .txt indicating that it is a text file, a filename extension of jpeg to indicate that it is a digital image in the JPEG standard, etc. The file may be in any of various other formats and have any of various other filename extensions. The file 112 may include metadata, or data that provides information about the contents and/or attributes of the file 112. The file 112 can include, for example, static content (e.g., text or other specified content) that is within the file itself and/or does not change over time. The file 112 can also include dynamic content that may change over time or on a per-request basis. For example, a user who submits a file for analysis can maintain a data source that is used to populate portions of the electronic document. In this example, the given file can include one or more tags or scripts that cause the client device 110 to request content from the data source when the given file is processed (e.g., rendered or executed) by the client device 110. The client device 110 integrates the content obtained from the data source into the given electronic document to create a composite electronic document including the content obtained from the data source.

The network 120 can be a local area network (LAN), a wide area network (WAN), the Internet, or a combination thereof. The network 120 connects the client device 110 with the file analysis system 130. The network 120 may include 802.11 "Wi-Fi" wireless Ethernet (e.g., using low-power Wi-Fi chipsets), Bluetooth, networks that operate over AC wiring, or Category 5 (CAT5) or Category 6 (CAT6) wired Ethernet network.

The file characterization system 130 receives the files 112 for processing from users of the environment 100 and characterizes and indexes the files 112. The file characterization system 130 includes a format detector 132, a file feature selector 134, a file feature extractor 136, a hash generator 138, and an indexer 140. The file characterization system 130 analyzes files to characterize and index files received from users of the client device 110.

The format detector 132 detects formats of the files 112 received from the users. The files 112 may be in various formats. In some examples, the files 112 are each of the same file format. For example, each file 112 received by the file characterization system 130 may be a binary file. In some examples, the files 112 are of various different file formats. For example, two files 112 received by the file characterization system 130 may be computer-aided design (CAD) files, one file 112 may be a SQL Compact Database file, and one file 112 may be a Microsoft Works Database file.

The file feature selector 134 selects a set of one or more file features to extract from each of the files 112 based on the format of the file determined by the format detector 132. That is, the file feature selector 134 maintains data identifying, for each of multiple file formats, a respective set of features to be extracted from files having that format. For example, the file feature selector 134 may determine that, because file 112 is a text file, there is a file name, a last modified date, and a file size available for the file 112.

The file feature extractor 136 extracts, for each file feature in the set of file features selected by the file feature selector 134 as corresponding to the file type of the file 112, a respective feature value for the file feature from the file 112. Metadata of a file is data that provides information about the file. In some examples, the metadata of a file 112 includes features and properties of the file 112. The file 112 may have various features or properties, including a file name, a last accessed date, a last modified date, a file size, an author, file attributes, location, contents, etc. The file feature extractor 136 may detect a value of the feature from metadata of the file 112. For example, the file feature extractor 136 may extract the value of a particular file feature, such as the author of a Word document 112, from the metadata of the document 112.

The hash generator 138 generates a hash for the file 112 based on the feature values extracted by the file feature extractor 136. For example, the hash generator 138 may use a hash function to generate a hash for the file 112. The hash generator 138 may use any of various hash function algorithms, including a trivial hash function, a perfect hash function, a rolling hash, a universal hash, a hash function with checksum functions, a multiplicative hash function, a cryptographic hash function, a nonlinear table lookup function, etc. For example, the hash generator 138 may use MD5 hashes.

The indexer 140 indexes the files 112 received from the users using the hash generated for the file by the hash generator 138. In some examples, the indexer 140 uses a hash table to locate data in a memory, such as an index 150. For example, the indexer 140 may use the generated hash as a key to find the mapped location of the file 112 for which the hash was generated. The indexer 140 may use the hash to quickly locate data without having to search each row in the table every time the table is accessed. For example, the indexer 140 may create a copy of selected portions of the table that can be searched efficiently and includes a block address or a direct link to the complete row or column of the table from which the portion was copied.

The file characterization system 130 can access the index 150 in which the file 112 received from the user of the client device 110 is indexed by the indexer 140. In some examples, the index 150 may be a volatile memory. For example, the index 150 may be a random-access memory (RAM). In some examples, the index 150 may be a non-volatile memory. For example, the index 150 may be a storage device such as a hard disk drive, a solid state drive, read-only memory, etc.

In some examples, the index may include information describing methods of removal for particular malware files and/or families of malware files. For instance, malware files in the index may be associated with a method of removal. As such, in response to receiving a malware file, the file characterization system 130 can access the index 150 to identify malware files having similar features to the received file and also the associated method(s) of removal, which may also be appropriate for the received malware file. In some examples, if a client device 110 forwards the malware file for analysis, the file characterization system 130 may in response identify a potential method of removal. The file characterization system 130 may also cause the identified method of removal to be implemented on the client device (subject to consent from the user of the client device).

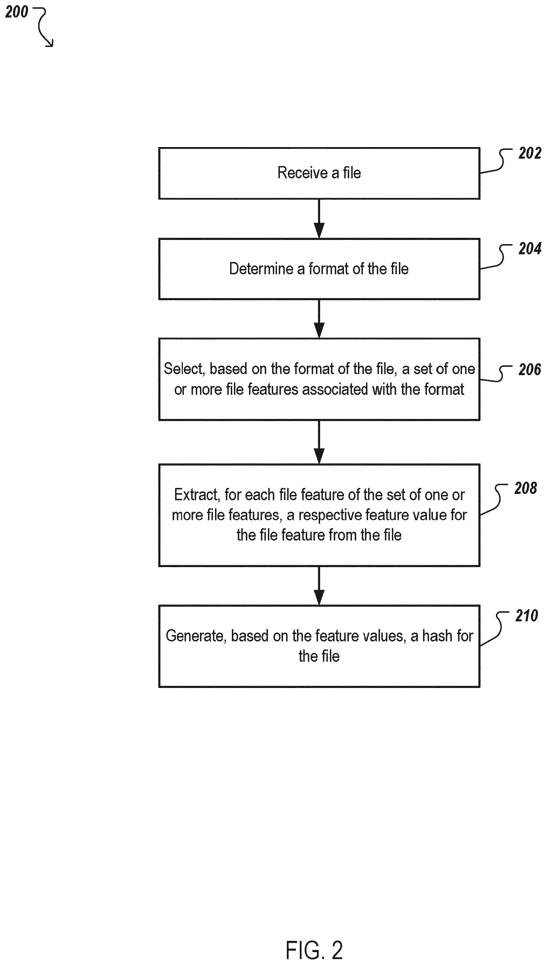

FIG. 2 is a flowchart of an example process 200 for characterizing files. The process 200 may be performed by a system of one or more computers in one or more locations such as the file characterization system 130.

The system receives a file (202). For example, the file characterization system 130 may receive a file 112 from a user of the client device 110 through the network 120.

The system determines a format of the file (204). For example, the format detector 132 of the file characterization system 130 may determine the format of the file 112.

The system selects, based on the format of the file, a set of one or more file features of files having the format (206). For example, the file feature selector 134 of the file characterization system 130 may select a set of one or more file features based on the format determined by the format detector 132. In some examples, the set of one or more file features may be different for different file formats. For example, a set of file features for the file format having the extension .doc may include: author name, file size, and last accessed date, while a set of file features for the file format having the extension .pdf may include: file size, whether there is an author signature, whether the file is searchable, last accessed date, and how many times the file has been updated.

The system extracts, for each file feature of the set of one or more file features, a respective feature value for the file feature from the file (208). For example, the file feature extractor 136 may extract feature values for each of the file features selected by the file feature selector 134 from the file 112. In some examples, the file feature extractor 136 extracts feature values for each of the file features from the file 112 using the metadata of the file 112.

The system generates, based on the feature values, a hash for the file (210). For example, the hash generator 138 of the file characterization system 130 may generate a hash for the file 112 based on the feature values extracted by the file feature extractor 136.

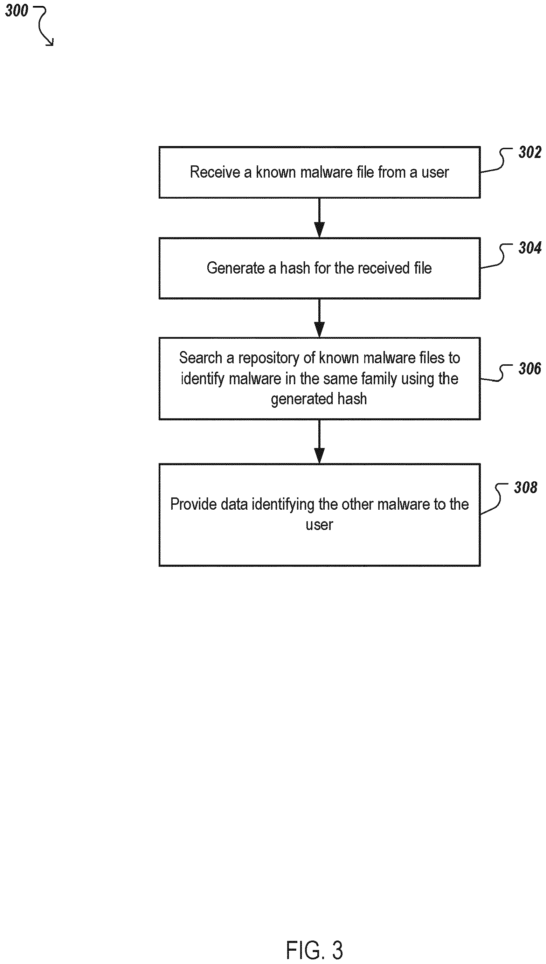

FIG. 3 is a flowchart of an example process 300 for searching for and identifying files. The process 300 may be performed by a system of one or more computers in one or more locations such as the file characterization system 130.

The system receives a known malware file from a user (302). For example, the file characterization system 130 may receive the file 112 from the user. In this particular example, the file 112 may be a file known to be malware. In some examples, the user may submit the known malware file 112 and request that a search is performed to identify other malware similar to the known malware file 112.

For example, the user may be someone who wishes to identify malware similar to the known malware file 112, such as malware within a same malware family as the known malware file 112 to identify the origin of the known malware file 112 and/or to identify a method for removal of the malware. In some examples, each malware family shares one or more signature features. For example, a particular malware family may all include an author name of "Mad Max." In some examples, the one or more signature features are used to generate the hash for a particular file, and files having the same one or more signature features will have the same hash. In some examples, the hash generated using the one or more signature features of a malware file may be used to search for other malware, and the identified other malware may indicate the origin or author of the identify other features of the malware file.

The system generates a hash indicating a malware family for the received file (304). For example, the hash generator 138 of the file characterization system 130 may generate a hash for the received file 112. In some examples, the hash for the received file 112 may be generated according to the process 200. In some examples, the hash for the received file 112 may indicate a malware family for the received known malware file 112. For example, the generated hash may be an index for all files within the same malware family as the received known malware file 112.

The system searches a repository of known malware files to identify other malware in the same malware family as the received file using the generated hash (306). For example, indexer 140 may search the index 150 using the generated hash. In some examples, the index 150 may list known malware files by the generated hashes for the respective files. In some examples, the indexer 140 may search the index 150 using the generated hash to identify other malware in the same malware family as the received known malware file 112 by looking up the generated hash for the file 112.

The system provides data identifying the identified other malware to the user in response to their request (308). For example, the file characterization system 130 may provide data identifying the identified other malware over the network 120 to the user through the client device 110. Also, as discussed above, in some examples, a method of removal of the malware file may be identified by the file characterization system 130 and/or may be caused to be performed on the client device, thereby to attempt to remove the malware file from the client device.

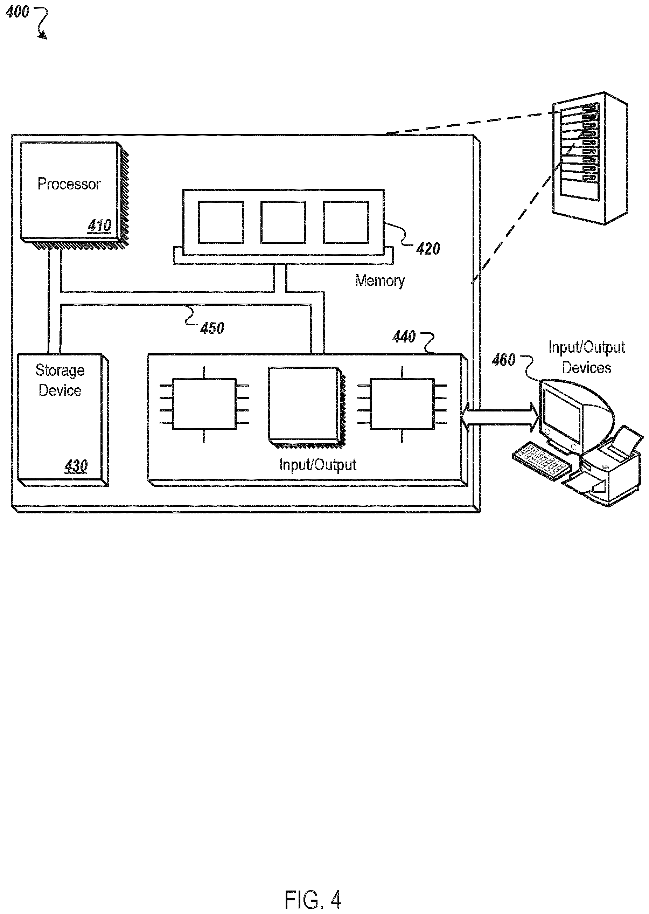

FIG. 4 is block diagram of an example computer system 400 that can be used to perform operations described above. The system 400 includes a processor 410, a memory 420, a storage device 430, and an input/output device 440. Each of the components 410, 420, 430, and 440 can be interconnected, for example, using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 can include, for example, a hard disk device, an optical disk device, a storage device that is shared over a network by multiple computing devices (e.g., a cloud storage device), or some other large capacity storage device.

The input/output device 440 provides input/output operations for the system 400. In one implementation, the input/output device 440 can include one or more network interface devices, e.g., an Ethernet card, a serial communication device, e.g., and RS-232 port, and/or a wireless interface device, e.g., and 802.11 card. In another implementation, the input/output device can include driver devices configured to receive input data and send output data to other input/output devices, e.g., keyboard, printer and display devices 460. Other implementations, however, can also be used, such as mobile computing devices, mobile communication devices, set-top box television client devices, etc.

Although an example processing system has been described in FIG. 4, implementations of the subject matter and the functional operations described in this specification can be implemented in other types of digital electronic circuitry, or in computer software, firmware, or hardware, including the structures disclosed in this specification and their structural equivalents, or in combinations of one or more of them.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage media (or medium) for execution by, or to control the operation of, data processing apparatus. Alternatively, or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including, by way of example, a programmable processor, a computer, a system on a chip, or multiple ones, or combinations, of the foregoing. The apparatus can include special-purpose logic circuitry, e.g., an FPGA (field-programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a standalone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special-purpose logic circuitry, e.g., an FPGA (field-programmable gate array) or an ASIC (application-specific integrated circuit).

Processors suitable for the execution of a computer program include, by way of example, both general and special-purpose microprocessors. Generally, a processor will receive instructions and data from a read-only memory or a random-access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including, by way of example, semiconductor memory devices, e.g., EPROM, EEPROM, and flash memory devices; magnetic disks, e.g., internal hard disks or removable disks; magneto-optical disks; and CD ROM and DVD-ROM disks. The processor and the memory can be supplemented by, or incorporated in, special-purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method of clustering files by a file characterization system (130) comprising one or more computers (400), wherein the method comprises:
receiving, by the one or more computers, a plurality of files (112), wherein each file in the plurality of files is in a format, and the formats of the files include formats that are different from each other;
accessing data identifying, for each of the file formats, a respective set of file features to be extracted from files having that format, wherein the respective set of file features for the file format is different from the respective sets of file features for other respective file formats;
for each of the files of the plurality of files:
determining, by the one or more computers, a format of the file;
selecting, by the one or more computers and based on the format of the file, file features associated with the format, the file features being the respective set of file features identified for the file format of the file;
extracting, by the one or more computers and for each file feature of the file features, a respective feature value for the file feature from the file;
generating, by the one or more computers and based on the feature values, a hash for the file, wherein files that have matching feature values for each file feature have a same hash; and
storing, in an index that lists files by their respective hashes, the file using the generated hash;
receiving a known malware file;
submitting, as a search query to search the index, a hash generated from feature values extracted from the known malware file;
identifying, in response to submitting the search query, all files that are indexed by the generated hash for the known malware file; and
providing data identifying the files identified in response to submitting the search query, wherein the files identified in response to submitting the search query belong to a family of malware files that includes the known malware file.

2. The computer-implemented method of claim 1, wherein at least one file feature of the file features is: a file size, a file type, or a metadata value.

3. The computer-implemented method of claim 1, wherein generating, by the one or more computers and based on values of the extracted data, the hash for the file comprises:
combining the feature values to generate a combined representation of the features of the file; and
applying a hashing function to the combined representation to generate the hash of the file.

4. The computer-implemented method of claim 1, wherein selecting, by the one or more computers and based on the format of the file, file features of files having the format comprises:
identifying, by the one or more computers and based on the format of the file, predetermined file features, and
updating, in response to extracting the respective feature values by the one or more computers and based on the values of the extracted respective feature values, the predetermined file features.

5. The computer-implemented method of claim 1, wherein determining a format of the file comprises determining the format based on a filename extension of the file.

6. A file characterization system (130), comprising:
one or more computers (400); and
one or more storage devices (430) storing instructions that when executed by the one or more computers cause the one or more computers to perform the method of any of claims 1-5.

7. One or more computer readable media (420; 430) storing instructions that when executed by one or more computers (400) cause the one or more computers to perform the method of any of claims 1-5.

8. A computer program comprising computer executable instructions that when executed by one or more computers (400) cause the one or more computers to perform the method of any of claims 1-5.

## Patentansprüche

1. Computerimplementiertes Verfahren zum Clustern von Dateien durch ein System zur Kennzeichnung von Dateien (130), umfassend einen oder mehrere Computer (400), wobei das Verfahren Folgendes umfasst:
Empfangen, durch den einen oder die mehreren Computer, einer Vielzahl von Dateien (112), wobei jede Datei der Vielzahl von Dateien in einem Format vorliegt und die Formate der Dateien Formate beinhalten, die sich voneinander unterscheiden;
Zugreifen auf Daten, die für jedes der Dateiformate einen jeweiligen Satz von Dateimerkmalen identifizieren, die aus Dateien mit diesem Format zu extrahieren sind, wobei sich der jeweilige Satz von Dateimerkmalen für das Dateiformat von den jeweiligen Sätzen von Dateimerkmalen für andere jeweilige Dateiformate unterscheidet;
für jede der Dateien aus der Vielzahl von Dateien:
Ermitteln, durch den einen oder die mehreren Computer, eines Formats der Datei;
Auswählen, durch den einen oder die mehreren Computer und basierend auf dem Format der Datei, von Dateimerkmalen, die mit dem Format assoziiert sind, wobei die Dateimerkmale der jeweilige Satz von für das Dateiformat der Datei identifizierten Dateimerkmalen sind;
Extrahieren, durch den einen oder die mehreren Computer und für jedes Dateimerkmal der Dateimerkmale, eines jeweiligen Merkmalswerts für das Dateimerkmal aus der Datei;
Erzeugen, durch den einen oder die mehreren Computer und basierend auf den Merkmalswerten, eines Hash für die Datei, wobei Dateien, die übereinstimmende Merkmalswerte für jedes Dateimerkmal aufweisen, einen gleichen Hash haben; und
Speichern, in einem Index, der Dateien nach ihren jeweiligen Hashs auflistet, der Datei unter Nutzung des erzeugten Hash;
Empfangen einer bekannten Malware-Datei;
Übermitteln, als Suchanfrage zum Durchsuchen des Index, eines Hash, der aus Merkmalswerten erzeugt wird, die aus der bekannten Malware-Datei extrahiert wurden;
Identifizieren, in Reaktion auf das Übermitteln der Suchanfrage, aller Dateien, die durch den erzeugten Hash für die bekannte Malware-Datei indexiert sind; und
Bereitstellen von Daten, die die Dateien identifizieren, die in Reaktion auf das Übermitteln der Suchanfrage identifiziert wurden, wobei die Dateien, in Reaktion auf das Übermitteln der Suchanfrage identifiziert werden, zu einer Gruppe von Malware-Dateien gehören, die die bekannte Malware-Datei beinhaltet.

2. Computerimplementiertes Verfahren nach Anspruch 1, wobei zumindest ein Dateimerkmal der Dateimerkmale Folgendes ist: eine Dateigröße, ein Dateityp oder ein Metadatenwert.

3. Computerimplementiertes Verfahren nach Anspruch 1, wobei das Erzeugen, durch den einen oder die mehreren Computer und basierend auf Werten der extrahierten Daten, des Hash für die Datei, Folgendes umfasst:
Kombinieren der Merkmalswerte, um eine kombinierte Darstellung der Merkmale der Datei zu erzeugen; und
Anwenden einer Hashfunktion auf die kombinierte Darstellung, um den Hash der Datei zu erzeugen.

4. Computerimplementiertes Verfahren nach Anspruch 1, wobei das Auswählen, durch den einen oder die mehreren Computer und basierend auf dem Format der Datei, von Dateimerkmalen von Dateien, die das Format aufweisen, Folgendes umfasst:
Identifizieren, durch den einen oder die mehreren Computer und basierend auf dem Format der Datei, von vorbestimmten Dateimerkmalen, und
Aktualisieren, in Reaktion auf das Extrahieren der jeweiligen Merkmalswerte durch den einen oder die mehreren Computer und basierend auf den Werten der extrahierten jeweiligen Merkmalswerte, der vorbestimmten Dateimerkmale.

5. Computerimplementiertes Verfahren nach Anspruch 1, wobei das Ermitteln eines Formats der Datei ein Ermitteln des Formats basierend auf einem Dateinamenzusatz der Datei umfasst.

6. System zur Kennzeichnung von Dateien (130), umfassend: einen oder mehrere Computer (400); und
ein oder mehrere Speichergeräte (430), die Anweisungen speichern, die, bei Ausführung durch den einen oder die mehreren Computer, den einen oder die mehreren Computer veranlassen, das Verfahren nach einem der Ansprüche 1-5 durchzuführen.

7. Ein oder mehrere computerlesbare Medien (420; 430), auf denen Anweisungen gespeichert sind, die bei Ausführung durch einen oder mehrere Computer (400) den einen oder die mehreren Computer veranlassen, das Verfahren nach einem der Ansprüche 1-5 durchzuführen.

8. Computerprogramm, umfassend computerausführbare Anweisungen, die bei Ausführung durch einen oder mehrere Computer (400) den einen oder die mehreren Computer veranlassen, das Verfahren nach einem der Ansprüche 1-5 durchzuführen.

## Revendications

1. Procédé mis en œuvre par ordinateur de regroupement de fichiers par un système de caractérisation de fichiers (130) comprenant un ou plusieurs ordinateurs (400), dans lequel le procédé comprend :
la réception, par les un ou plusieurs ordinateurs, d'une pluralité de fichiers (112), dans lequel chaque fichier dans la pluralité de fichiers est dans un format, et les formats des fichiers comportent des formats qui sont différents les uns des autres ;
l'accès à des données identifiant, pour chacun des formats de fichier, un ensemble respectif de caractéristiques de fichier à extraire de fichiers ayant ce format, dans lequel l'ensemble respectif de caractéristiques de fichier pour le format de fichier est différent des ensembles respectifs de caractéristiques de fichier pour d'autres formats de fichier respectifs ;
pour chacun des fichiers de la pluralité de fichiers :
la détermination, par les un ou plusieurs ordinateurs, d'un format du fichier ;
la sélection, par les un ou plusieurs ordinateurs et sur la base du format du fichier, de caractéristiques de fichier associées au format, les caractéristiques de fichier étant l'ensemble respectif de caractéristiques de fichier identifié pour le format de fichier du fichier ;
l'extraction, par les un ou plusieurs ordinateurs et pour chaque caractéristique de fichier des caractéristiques de fichier, d'une valeur de caractéristique respective pour la caractéristique de fichier à partir du fichier ;
la génération, par les un ou plusieurs ordinateurs et sur la base des valeurs de caractéristique, d'un hachage pour le fichier, dans lequel les fichiers qui ont des valeurs de caractéristique concordantes pour chaque caractéristique de fichier ont un même hachage ; et
le stockage, dans un index qui répertorie des fichiers par leurs hachages respectifs, du fichier à l'aide du hachage généré ;
la réception d'un fichier de logiciel malveillant connu ;
la soumission, en tant que requête de recherche pour effectuer une recherche dans l'index, d'un hachage généré à partir de valeurs de caractéristique extraites à partir du fichier de logiciel malveillant connu ;
l'identification, en réponse à la soumission de la requête de recherche, de tous les fichiers qui sont indexés par le hachage généré pour le fichier de logiciel malveillant connu ; et
la fourniture de données identifiant les fichiers identifiés en réponse à la soumission de la requête de recherche, dans lequel les fichiers identifiés en réponse à la soumission de la requête de recherche appartiennent à une famille de fichiers de logiciel malveillant qui comporte le fichier de logiciel malveillant connu.

2. Procédé mis en œuvre par ordinateur selon la revendication 1, dans lequel au moins une caractéristique de fichier des caractéristiques de fichier est : une taille de fichier, un type de fichier ou une valeur de métadonnées.

3. Procédé mis en œuvre par ordinateur selon la revendication 1, dans lequel la génération, par les un ou plusieurs ordinateurs et sur la base de valeurs des données extraites, du hachage pour le fichier comprend :
la combinaison des valeurs de caractéristique pour générer une représentation combinée des caractéristiques du fichier ; et
l'application d'une fonction de hachage à la représentation combinée pour générer le hachage du fichier.

4. Procédé mis en œuvre par ordinateur selon la revendication 1, dans lequel la sélection, par les un ou plusieurs ordinateurs et sur la base du format du fichier, de caractéristiques de fichier de fichiers ayant le format comprend :
l'identification, par les un ou plusieurs ordinateurs et sur la base du format du fichier, de caractéristiques de fichier prédéterminées, et
la mise à jour, en réponse à l'extraction des valeurs de caractéristique respectives par les un ou plusieurs ordinateurs et sur la base des valeurs des valeurs de caractéristique respectives extraites, des valeurs de fichier prédéterminées.

5. Procédé mis en œuvre par ordinateur selon la revendication 1, dans lequel la détermination d'un format du fichier comprend la détermination du format sur la base d'une extension de nom de fichier du fichier.

6. Système de caractérisation de fichiers (130), comprenant :
un ou plusieurs ordinateurs (400) ; et
un ou plusieurs supports de stockage (430) stockant des instructions qui, lorsqu'elles sont exécutées par les un ou plusieurs ordinateurs, amènent les un ou plusieurs ordinateurs à réaliser le procédé de l'une quelconque des revendications 1 à 5.

7. Un ou plusieurs supports lisibles par ordinateur (420 ; 430) stockant des instructions qui, lorsqu'elles sont exécutées par un ou plusieurs ordinateurs (400), amènent les un ou plusieurs ordinateurs à réaliser le procédé de l'une quelconque des revendications 1 à 5.

8. Programme d'ordinateur comprenant des instructions exécutables par ordinateur qui, lorsqu'elles sont exécutées par un ou plusieurs ordinateurs (400), amènent les un ou plusieurs ordinateurs à réaliser le procédé de l'une quelconque des revendications 1 à 5.
